Europäisches Patentamt

(19) European Patent Office

Office européen des brevets

(11) Publication number: **0 207 917**
**B1**

(12) **EUROPEAN PATENT SPECIFICATION**

(45) Date of publication of patent specification: **19.09.90**

(51) Int. Cl.⁵: **B 29 C 31/04, B 29 C 39/24**

(21) Application number: **86850235.2**

(22) Date of filing: **27.06.86**

(54) **A gate valve.**

(30) Priority: **03.07.85 SE 8503310**

(43) Date of publication of application:
**07.01.87 Bulletin 87/02**

(45) Publication of the grant of the patent:
**19.09.90 Bulletin 90/38**

(84) Designated Contracting States:
**AT BE CH DE FR GB IT LI LU NL**

(56) References cited:
**FR-A-2 355 644**
**NL-A-6 411 359**
**US-A-2 520 263**

**PATENT ABSTRACTS OF JAPAN, vol. 10, no.
130 (M-478)2187r, 14th May 1986; & JP-A-60 255
409 (SUWA SEIKOSHA K.K.) 17-12-1985**

(73) Proprietor: **Shires Limited
Guiseley
Leeds LS20 8AP (GB)**

(72) Inventor: **Eriksson, Rolf
Radjursvägen 15
S-13400 Gustavsberg (SE)**

(74) Representative: **Jennings, Nigel Robin et al
KILBURN & STRODE 30 John Street
London WC1N 2DD (GB)**

Courier Press, Leamington Spa, England.

# Description

The present invention relates to a gate valve according to the pre-characterizing clause of Claim 1. Such a gate valve is known from FR-A 2355644.

Sinks, wash basins and like equipment can now be manufactured to advantage from polymer materials together with ballast, with the aid of die-casting or moulding techniques. One such polymer material comprises 70% silica sand of cristobalitic structure admixed with polymer binders. Preferably, the curing agent used in the mixture comprises organic peroxides which cause the mixture to harden at elevated temperatures, e.g. 90°C. The time taken for the mixture to harden is from 15-45 minutes, depending upon the composition of the curing agent, during which time the cast article remains in the die.

Manufacture is carried out by mixing the starting materials at room temperature and then introducing the resultant mix into a pressure tank. The tank is then placed under a pressure of about 2 bars, for example with the aid of air under pressure. The mix is then passed through conduits from the tank into the die tool, which normally comprises an upper and a lower die part, between which the article is formed under pressure. The casting material is introduced into the die from beneath, and when producing, e.g., sinks, the die halves are placed so that the sink is cast on end. As the die is filled with casting material from beneath, the air present between the die halves is released through an air ventilating valve. The casting material is injected into the die until it reaches the ventilating valve. In order to obtain a product which is as compact as possible with maximum surface smoothness, the die is placed under pressure, with the aid of hydraulic rams, during the time taken for the material to harden or set. In this case, the pressure should reach 10 bars.

It has been found that due to the transfer of heat from the heated die halves, the material also solidifies along part of the filling pipe or inlet passage, to form a flash or stalk. Since it is practically impossible to remove this hardened material flash or stalk, it has been necessary hitherto to use a heavily reinforced plastic hose in the inlet passage. This hose has been divided into two sections, with an intermediate conduit, preferably exhibiting a conical throughpassage. Prior to pressurizing the die, the one hose section is folded back through an angle of 180° and a ring is forced over the fold. The other hose section is then folded in a similar manner and sealed with a further ring. It has been possible to withstand the die pressure during the hardening or setting period, by using a sufficiently powerful hose. At least the hose section nearest the die has to be scrapped upon completion of a die-casting operation. The cost of the hoses naturally has a negative influence on the profitability of the product.

In order to eliminate these drawbacks there is provided in accordance with the invention a gate valve for use with dies or moulds in which articles are to be cast under pressure, this gate valve having the characteristic features set forth in the characterizing clause of Claim 1. The invention provides a gate valve which leaves on the casting only a relatively shallow flash, which can be readily ground away without requiring any part of the system to be scrapped. A gate valve constructed in accordance with the invention also contributes towards simplifying manufacturing procedures.

These and other advantages will be made more apparent in the following description of a gate valve according to the invention, made with reference to the accompanying drawings, in which

Figure 1 is a cross-sectional view of a gate valve according to the invention, with the plunger in an open position.

Figure 2 is a side view, partly in section, of a tubular element incorporated in the valve of Figure 1 with a lever arm in the closing position of the plunger;

Figure 3 is a sectional view taken on the line III-III in Figure 2; and

Figure 4 is a cross-sectional view, in larger scale, of the part of the valve located nearest the die cavity.

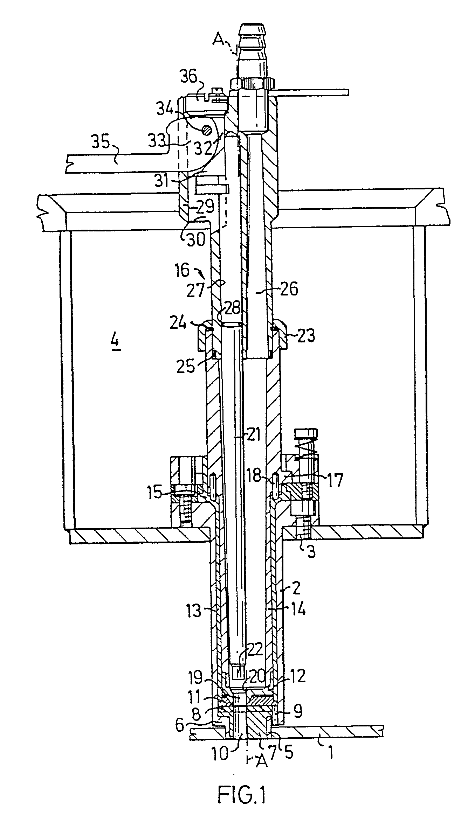

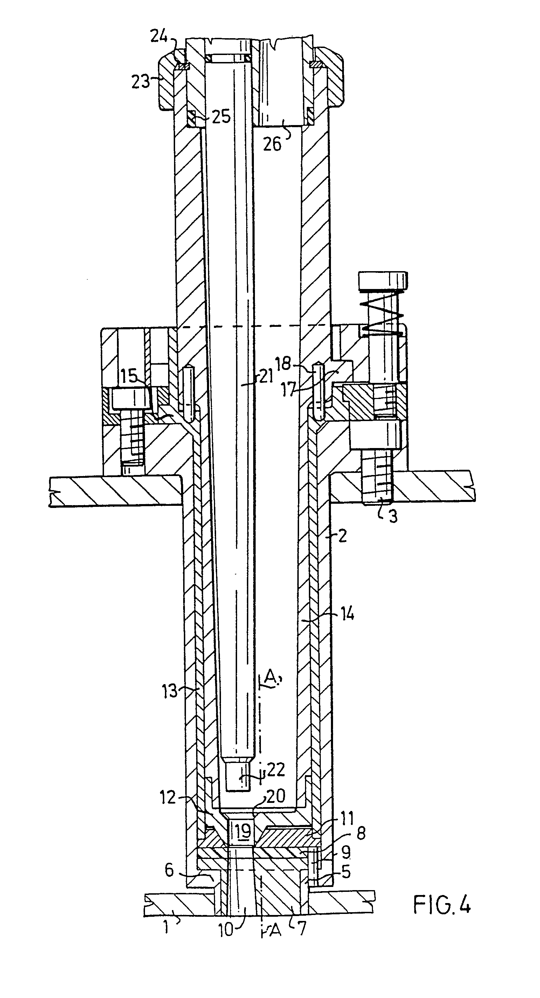

The gate valve according to the invention is journalled on a cylindrical sleeve-like element 2 for rotation about an axis A-A. One end of the sleeve-like element 2 is screwed firmly in a well 4 or like cavity of one die half, by means of screw-threaded bolts 3, of which one is shown in Figure 1 and Figure 4. The other end of the sleeve-like element, i.e. its lower end, is fitted with the aid of a ring flange 5 into an opening located in the inner wall 1 of the relevant die half, preferably the lower die half. The sleeve-like element 2 also incorporates an inwardly projecting peripheral flange 6, which connects the lower cylindrical end of the element with the ring flange 5.

Arranged inwardly of the ring flange 5 is a steel plug 7, the lower end of which extends to the inner surface of the inner wall of the die half. This plug has an outwardly projecting peripheral flange which extends outwards above the peripheral flange 6 on the sleeve-like element so as to contact the inner surface of said element. Located above the plug 7 is a Teflon disc or plate 8 which, together with the plug, is non-rotatably held to the peripheral flange of the element 2 by means of a locking pin 9, which passes through the Teflon disc and the peripheral flanges of the steel plug and the sleeve-like element. A material inlet opening 10 which diverges in a direction towards the die cavity is formed in the steel plug and the Teflon disc, and positioned eccentrically in relation to the longitudinal axis of the sleeve-like element 2.

Arranged above the Teflon disc 8 is a steel disc or plate 11, which is affixed around its periphery, preferably by gluing, to a sleeve 13, which is preferably made of brass. The steel disc 11 encirc-

2

les a bead-like part of a body 12, suitably made of hardened steel. The body 12 is provided with an annular flange which is joined to a further sleeve 14, for example welded thereto. The sleeve 13, which adjoins the steel disc 11, extends within the sleeve-like element 2 and presents at its upper end an outwardly extending peripheral flange 15, which slideably fits into a groove provided in the end of the sleeve-like element attached to the well 4. As will be seen from the Figures, this end of said element forms a part comprised of one or more separatable elements. The sleeve 14, which extends from the steel body 12 upwardly beyond the upper end of the sleeve-like element 2, carries on the upper end thereof a tubular element 16, which will be described in more detail hereinafter. The sleeve 14 has located on a level with the upper end of the sleeve-like element a guide shoulder 17 which slides in a guide groove located in the sleeve-like element above the groove accommodating the peripheral flange 15 of the sleeve 13.

The sleeves 13 and 14 are connected together, for example, by means of locking pins 18. Thus, the sleeves can rotate together around the axis A-A, and the rotational movement can be restricted, for example, by suitable design of the guide groove in the sleeve-like element receiving the guide shoulder 17.

The steel body 12 has provided therein a cylindrical opening 19 which passes through the bead-like part of said body and which has the same eccentricity as the opening 10 through the steel plug 7 and the Teflon disc 8, and the steel disc or plate 11 is provided with an opening having a shape corresponding to the configuration of the bead-like part of the steel body. The upper surface of the steel disc is spaced slightly from the main part of the steel body, so as to permit possible relative movement thereof caused by thermal expansion during the hardening or curing sequence. In the upper end of the opening 19, the steel body has a conical seat 20 for co-action with the lower end of a plunger 21, this lower end having a complementary conical shape. The aforesaid lower end is also provided with a peg 22 which fits into the cylindrical opening 19 and which when inserted into said opening extends to the under surface of the steel disc in abutment with the Teflon disc.

In the Figures the openings 10 and 19 are shown in register with one another. When rotating the assembly comprising the steel disc 11, the brass body 12, and the sleeves 13 and 14, the opening 19 is moved relative to the opening 10, and upon rotating the assembly through a given angle of rotation, the steel disc or plate 11 will cover the opening 10. In this regard, it shall be easy to identify at least the position in which the openings 10 and 19 are in register with one another, e.g. by providing a terminal position for movement of the guide shoulder in the guide groove.

The aforementioned tubular body 16 is attached sealingly to the upper end of the sleeve 14, by means of concentric lock nuts 23, a lock ring 24 which engages a groove in the tubular body, and a sealing ring 25. The tubular body is also provided with two axial openings 26 and 27, of which one, 26, is throughpassing and forms the inlet passage through which casting material is introduced into the mould cavity, and the other, 27, forms a bushing or leadthrough for the plunger 21, which is sealed against the wall of the bushing by means of an O-ring 28.

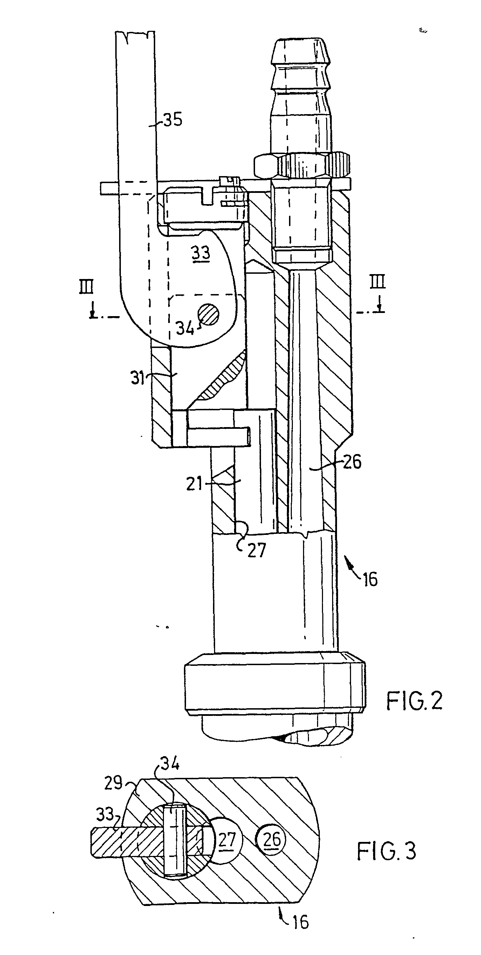

The upper portion of the tubular body 16 presents a widened part 29 which is provided on the side of the bushing 27 with a bore 30 which partially overlaps the uppermost part of said bushing. The diameter of the bore is substantially larger than the diameter of the bushing or leadthrough 27, and is intended to accommodate a piston 31 for axial displacement therein. The piston has an upwardly open slot 32 in which a camming plate in the form of one end 33 of a lever arm is pivotally mounted on a pivot pin 34. The lower end of the piston 31 is attached to the upper end of the plunger 21, e.g. through a hook joint. A lever arm 35 extends laterally through an aperture formed in the widened part 29 of the tubular body 16, and the camming lever end 33 of the lever arm bears against a setting screw screwed into the uppermost part of the bore. When the lever arm is moved upwards from the horizontal position in Figure 1 to the vertical position in Figure 2, the piston 31, and therewith also the plunger 21, are forced downwards to bring the bottom end of the plunger into abutment with the conical seat 20 of the steel body 12, lever arm movement from this position having the opposite effect.

The die-casting gate valve operates in the following manner. Subsequent to filling the die with casting material through the inlet passage 26, the space formed by the sleeve 14, and the inlet opening 10, the lever arm 35 is moved upwardly, so as to swing the camming plate 33 to the position shown in Figure 2, therewith bringing the plunger 21 into sealing abutment with the seat 20. During this movement, the peg 22 forces casting material present in the opening 19 into the inlet opening 10 and then blocks the opening 19 in the steel disc. The mutually connected sleeves 13, 14, and therewith the steel disc 11 and the steel body 12, are then rotated through 180°, therewith bringing the steel disc or plate 11 to a position in which it covers the inlet opening 10 through the steel plug 7 and the Teflon disc or plate 8.

The casting material is then allowed to harden in the die, together with the sprue, which merely comprises a small or shallow stalk of some ten millimetres in length and which extends through the steel plug and the Teflon disc up to the steel disc or plate. This sprue is ground-off subsequent to dismantling the die.

It will be seen that the invention provides an economically favourable solution, which also simplifies the manual work entailed in filling the die.

The described and illustrated embodiment is not limitative of the invention, since several modifications are possible within the scope thereof. For example, the manner in which the rotatable valve components are attached may be varied, as may also the materials chosen for this manufacture. The lever mechanism may also have a form different to that illustrated and described. Consequently, the scope of the invention is solely restricted by the statements made in the following claims.

## Claims

1. A gate valve for a die or mould in which an article is to be cast and cured under heat and pressure, including an axially movable plunger (21) which in a first position exposes a casting material inlet opening (10) to the die-cavity and which in a second position sealingly closes said inlet opening (10), characterized by for casting an article containing cristalline ballast a steel disc or plate (11) is secured to a rotatable sleeve (13), which disc (11) has an opening (19) for the passage of casting material therethrough, which opening (19) is positioned eccentrically in relation to the axis of rotation (A-A) and which opening in a first position of rotation is in register with the casting material inlet opening (10) and which in a second position of rotation lies to one side of and outside said inlet opening (10), such that the steel disc or plate (11) covers the die-cavity inlet opening (10) in said second position of rotation, said plunger (21) being rotatable together with the sleeve (13) and the steel disc (11) and being moved to its second position when the steel disc (11) is rotated from its first to its second position, whereby the plunger (21) and a second sleeve (14) surrounding the plunger and having a disc-like or plate-like body (12) in its one end, in the second position of the steel disc (11), is isolated from the casting material which will cure in the die under pressure and heat, since the steel disc (11) in its second position pressure-tight seals the inlet opening (10) to the die-cavity, which opening has just a short axial length in order to reduce the amount of casting material cured in this opening.

2. A valve according to Claim 1, characterized in that the die-cavity inlet opening (10) is formed in a steel plug (7) and a Teflon disc or plate (8) which are arranged sequentially to one another and non-rotatably attached to a sleeve-like element (2) which extends into the die-cavity wall (1) to a level flush with the inner surface thereof and which is attached to the wall of a well (4) arranged in the die; and in that the casting material inlet opening (10) diverges towards the die-cavity.

3. A valve according to Claim 1, characterized in that the steel disc (11) is firmly connected on the side thereof remote from the die-cavity with an outwardly projecting part of a disc-like or plate-like metal body (12), this outwardly projecting part surrounding the opening (19) coinciding with the opening of the steel disc; and in that the metal body (12) includes on the side thereof remote from the steel disc a conical seat (20), which is formed around the opening (19) in the metal body and receives the end of the plunger (21).

4. A valve according to Claim 3, characterized in that the steel disc or plate (11) and the metal body (12) are firmly connected to the ends of the sleeves (13, 14) being arranged concentrically in the sleeve-like element (2), said sleeves (13, 14) being connected to one another and journalled for rotation, but held against axial movement, in the end of the sleeve-like element (2) remote from the die-cavity.

5. A valve according to Claim 4, characterized in that the inner second sleeve (14) connected to the metal body (12) extends beyond the sleeve-like element (2); and in that the end of said inner sleeve has provided in the end thereof remote from the die-cavity an attachment for a tubular body (16) which incorporates two axial openings (26, 27), of which the one opening (26) is throughpassing and constitutes an inlet passage for the material to be cast, and the other (27) forms a bushing for the plunger (21), which is sealingly guided in the bushing.

6. A valve according to Claim 5, characterized by a lever arm mechanism for effecting axial movement of the plunger (21).

## Patentansprüche

1. Absperrschieber für eine Gießmatrix oder Form zum Gießen eines Werkstücks und zu dessen Aushärten unter Wärme- und Druckeinwirkung, mit einem axial bewegbaren Plunger (21), der in einer ersten Position eine zum Formhohlraum führende Gießmaterial-Einlaßöffnung (10) freigibt und in einer zweiten Position diese Einlaßöffnung abdichtend schließt, dadurch gekennzeichnet, daß zum Gießen eines kristallinen Ballasttstoff enthaltenden Werkstücks eine Stahlscheibe oder -platte (11) an einer drehbaren Hülse (13) befestigt ist und eine Öffnung (19) für den Durchgang von Gießmaterial aufweist, welche exzentrisch zur Drehachse (A-A) angeordnet ist und in einer ersten Drehstellung mit der Gießmaterial-Einlaßöffnung (10) fluchtet sowie in einer zweiten Drehstellung derart zur einen Seite und jenseits der Einlaßöffnung (10) liegt, daß die Stahlscheibe oder -platte (11) die Formhohlraum-Einlaßöffnung (10) in der zweiten Drehstellung überdeckt, wobei der Plunger (21) zusammen mit der drehbaren Hülse (13) und der Stahlscheibe (11) drehbar ist sowie in seine zweiten Position bewegt wird, wenn die Stahlscheibe (11) aus ihrer ersten in ihre zweite Stellung gedreht wird, wodurch der Plunger (21) und eine zweite Hülse (14), die den Plunger umgibt und einen scheibenförmigen oder plattenförmigen Körper (12) an ihrem einen Ende trägt, in der zweiten Stellung der Stahlscheibe (11) von dem Gießmaterial, welches in der Form unter Druck- und Wärmeeinwirkung aushärten wird, getrennt sind, da die Stahlscheibe (11) in ihrer zweiten Stellung die zum Formhohlraum führende Einlaßöffnung (10) druckdicht abdichtet, welche nur eine kurze axiale Länge besitzt, um die Menge an Gießmaterial, die in dieser Öffnung aushärtet, zu vermindern.

2. Schieber nach Anspruch 1, dadurch gekennzeichnet, daß die Formhohlraum-Einlaßöffnung (10) in einem Stahlzapfen (7) und einer Teflonscheibe oder -platte (8) ausgebildet ist, welche aufeinanderfolgend angeordnet und drehfest an einem hülsenförmigen Element (2) befestigt sind, das sich in die Formhohlraum-Wand (1) bis zu einer Höhe erstreckt, die mit deren Innenfläche fluchtet, und das an der Wand eines in der Form angeordneten Schachtes (4) befestigt ist; und daß die Gießmaterial-Einlaßöffnung (10) sich in Richtung auf den Formhohlraum erweitert.

3. Schieber nach Anspruch 1, dadurch gekennzeichnet, daß die Stahlscheibe (11) auf ihrer fernab vom Formhohlraum liegenden Seite mit einem nach außen vorspringenden Teil eines scheibenförmigen oder plattenförmigen Metallkörpers (12) fest verbunden ist, wobei dieser nach außen vorspringende Teil die Öffnung (19), die mit der Öffnung der Stahlscheibe zusammenfällt, umgibt; und daß der Metallkörper (12) auf seiner fernab von der Stahlscheibe liegenden Seite einen konischen Sitz (20) aufweist, der rund um die Öffnung (19) des Metallkörpers angeordnet ist und das Ende des Plungers (21) aufnimmt.

4. Schieber nach Anspruch 3, dadurch gekennzeichnet, daß die Stahlscheibe oder -platte (11) und der Metallkörper (12) mit den Enden der Hülsen (13, 14) fest verbunden sind, welche konzentrisch in dem hülsenförmigen Element (2) angeordnet sind, wobei die Hülsen (13, 14) aneinander befestigt sowie drehbar, jedoch gegen Axialbewegung gesichert, in dem fernab von dem Formhohlraum liegenden Ende des hülsenförmigen Elements (2) gelagert sind.

5. Schieber nach Anspruch 4, dadurch gekennzeichnet, daß die innere zweite Hülse (14), die mit dem Metallkörper (12) verbunden ist, sich über das hülsenförmige Element (2) hinauserstreckt; und daß das Ende dieser inneren Hülse in seinem fernab von dem Formhohlraum liegenden Ende eine Befestigung für einen rohrförmigen Körper (16) aufweist, der über zwei axiale Öffnungen (26, 27) verfügt, von denen die eine Öffnung (26) durchgehend ausgebildet ist und einen Einlaßkanal für das zu vergießende Material bildet, während die andere Öffnung (27) eine Hülse für den Plunger (21) bildet, welcher abgedichtet in der Hülse geführt ist.

6. Schieber nach Anspruch 5, gekennzeichnet durch einen Hebelarmmechanismus zum Bewirken der Axialbewegung des Plungers (21).

**Revendications**

1. Une vanne pour un trou de coulée d'une matrice ou d'un moule dans lequel un article est à mouler et à traiter sous l'effet de la chaleur et de la pression, comportant un plongeur axialement mobile (21) qui, dans une première position, ouvre une ouverture (10) d'entrée du matériau à mouler vers une cavité de moulage et qui, dans une seconde position, ferme de façon étanche ladite ouverture d'entrée (10), caractérisée, pour le moulage d'un article contenant une charge cristalline, en ce qu'un disque ou une plaque en acier (11) est fixé à un manchon rotatif (13), ce disque (11) présentant une ouverture (19) pour le passage de traversée du matériau de moulage, ladite ouverture (19) étant positionnée de façon excentrique par rapport à l'axe de rotation (A-A) et l'ouverture étant en correspondance, dans une première position de rotation, avec l'ouverture d'entrée (10) de matériau de moulage et, dans une seconde position de rotation, se trouvant sur une face et à l'extérieur de ladite ouverture d'entrée (10), de telle façon que le disque ou la plaque en acier (11) recouvre l'ouverture d'entrée (10) de la cavité de moulage dans ladite seconde position de rotation, ledit plongeur (21) étant susceptible de tourner avec le manchon (13) et le disque en acier (11) et étant déplacé vers sa seconde position lorsque le disque en acier (11) est entraîné en rotation de sa première à sa seconde position, de manière que le plongeur (21) et un second manchon (14) qui entoure le plongeur et est muni d'un corps en forme de disque ou de plaque (12) à l'une de ses extrémités, soit isolé dans la seconde position du disque en acier (11), par rapport au matériau de moulage qui subira un traitement dans la matrice sous l'effet de la pression et de la chaleur, du fait que le disque en acier (11) ferme de façon étanche à la pression, dans sa seconde position, l'ouverture d'entrée (10) vers la cavité de moulage, cette ouverture présentant uniquement une faible longueur axiale afin de réduire la quantité de matériau de moulage soumis au traitement dans cette ouverture.

2. Une vanne selon la revendication 1, caractérisée en ce que l'ouverture d'entrée (10) de la cavité de moulage est formée d'un bouchon en acier (7) et d'un disque ou d'une plaque (8) en téflon qui sont disposés séquentiellement l'un après l'autre et qui ne sont pas fixés en rotation à un élément en forme de manchon (2) qui s'étend dans la paroi de la cavité de moulage (1) jusqu'au niveau de sa surface intérieure et qui est fixé à la paroi d'un puits (4) disposé dans la matrice, et en ce que l'ouverture d'entrée (10) du matériau de moulage diverge en direction de la cavité de moulage.

3. Une vanne selon la revendication 1, caractérisée en ce que le disque en acier (11) est rigidement relié sur l'une de ses faces à distance de la cavité de moulage avec une partie en saillie vers l'extérieur d'un corps métallique en forme de disque ou de plaque (12), cette partie en saillie vers l'extérieur entourant l'ouverture (19) venant en coïncidence avec l'ouverture du disque en acier, et en ce que le corps métallique (12) comporte latéralement, à distance du disque en acier, un siège conique (20) qui est formé autour de l'ouverture (19) dans le corps métallique et qui reçoit l'extrémité du plongeur (21).

4. Une vanne selon la revendication 3, caractérisée en ce que le disque ou la plaque en acier (11) et le corps métallique (12) sont rigidement reliés aux extrémités des manchons (13, 14) qui sont disposés concentriquement dans l'élément en forme de manchon (2), lesdits manchons (13, 14) étant reliés l'un à l'autre et montés à rotation dans des paliers mais bloqués en déplacement axial, à l'extrémité de l'élément en forme de manchon (2) à distance de la cavité de moulage.

5. Une vanne selon la revendication 4, caractérisée en ce que le second manchon intérieur (14) relié au corps métallique (12) s'étend au-delà de l'élément en forme de manchon (2), et en ce que l'extrémité dudit manchon intérieur comporte à son extrémité, à distance de la cavité de la matrice, une fixation pour un corps tubulaire (16) qui comporte deux ouvertures axiales (26, 27) dont l'une (26) est traversante et constitue un passage d'entrée pour le matériau à mouler, et dont l'autre (27) forme un manchon pour le plongeur (21) qui est guidé de façon étanche dans ce manchon.

6. Une vanne selon la revendication 5, caractérisée par un mécanisme de bras de levier apte à effectuer le déplacement axial du plongeur (21).

FIG.1

35

III — III

33

34

31

21

27

26

16

FIG.2

29

34

33

27    26

16

FIG.3

FIG.4